# EUROPEAN PATENT APPLICATION

(11) **EP 4 129 758 A1**
(43) Date of publication of application: **08.02.2023**
(21) Application number: 21795839.6
(22) Date of filing: 25.03.2021
(51) Int. Cl.: B60N 2/68

(54) **SKELETON STRUCTURE OF VEHICLE SEAT**

(30) Priority: 30.04.2020 CN 202010367177
(71) Applicant: NOBO Automotive Systems Co., Ltd., Baoding, Hebei 071000 (CN)
(72) Inventor: SHAO, Xichen, Baoding, Hebei 071000 (CN); REN, Hongwei, Baoding, Hebei 071000 (CN); LIU, Shuo, Baoding, Hebei 071000 (CN); TIAN, Miaolei, Baoding, Hebei 071000 (CN); SU, Yanpeng, Baoding, Hebei 071000 (CN)
(74) Representative: Loo, Chi Ching
(86) International application number: PCT/CN2021/082990
(87) International publication number: WO 2021/218508

(57) **Abstract**

A skeleton structure (10) of a vehicle seat, the structure comprising a backrest skeleton unit and a seat cushion skeleton unit, and a locking mechanism being provided between the two. The backrest skeleton unit comprises: a backrest skeleton (101), which is provided with two backrest side boards (1011,1013) that are opposite one another on the left and right; an upper beam (1012) and a lower beam (1014), which are connected between the two backrest side boards; and two connection boards (106), which are provided in one-to-one correspondence with the backrest side boards. The two backrest side boards have a broadening configuration in which the distance between the two increases gradually. The seat cushion skeleton unit comprises a seat cushion skeleton (102) and an adjusting assembly that is provided at the bottom part of the seat cushion skeleton (102). The adjusting assembly comprises a driven part (1024) that is provided on a rear linkage rod (1022), and a first energy-absorbing part, which can absorb energy by means of causing the driven part(1024) to collapse, is constructed on the driven part (1024). By means of constructing the two backrest side boards to be a broadening structure in which the distance between the two increases gradually, the skeleton structure of the vehicle seat effectively reduces the damage suffered by a passenger by insetting the passenger on the vehicle seat into the seat when the vehicle is impacted.

## Description

### CROSS-REFERENCES TO RELATED APPLICATIONS

The application claims benefit of Chinese Application No. 202010367177.0 filed on Apr. 30, 2020, content of which is incorporated herein by reference.

### TECHNICAL FIELD

The present disclosure relates to the technical field of vehicle parts, in particular to a vehicle seat frame structure.

### BACKGROUND

A vehicle seat frame is a part assembly that fixes a vehicle seat as a whole to a floor of a vehicle body, which is mainly used to support weight of the whole seat and occupants, and may realize adjustment of an angle of a seat backrest and a height of a seat cushion. At present, seat frames on the market mostly may be adjusted in four directions or six directions, which can't meet requirements of comfort of occupants. Moreover, it is difficult for existing seat frames to meet safety requirements of global regulations, and thus demand for exportation cannot be met. In addition, there is no interchangeability among different types of seat frames, and universality among manual/electric, three/five-door seat frames is poor, which causes redevelopment of a local structure of the seat frames, thus increasing developing cost.

### SUMMARY

In view of this, the present disclosure is directed to propose a vehicle seat frame structure with good safety performance.

To achieve above purposes, technical solutions of the present disclosure are implemented as follows:
a vehicle seat frame structure includes a backrest frame unit and a cushion frame unit, and a locking mechanism for locking relative positions of the backrest frame unit and the cushion frame unit is provided between the backrest frame unit and the cushion frame unit;
the backrest frame unit includes a backrest frame which is provided with two, namely left and right, opposite backrest side plates, an upper beam and a lower beam connected between the two backrest side plates, and two connecting plates which are arranged in one-to-one correspondence with the backrest side plates. Each of the connecting plates is pivotally connected with a corresponding backrest side plate via an angle adjusting mechanism for adjusting an angle of the backrest frame, and the two backrest side plates are arranged in a flared manner with a distance between them gradually increasing;
the cushion frame unit includes: a cushion frame and an adjusting assembly provided at a bottom of the cushion frame. The cushion frame has two, namely left and right, cushion side plates which are oppositely arranged, and a front linkage rod and a rear linkage rod which are connected between the two cushion side plates. Each of the cushion side plates is connected with a connecting plate at a corresponding side, and a seat basin is connected between the cushion side plates at both sides. The adjusting assembly is provided with a follower provided on the rear linkage rod. The follower receives an external force to form an action of the adjusting assembly so as to adjust a height of the cushion frame unit, and the follower is configured with a first energy absorbing part which can cause the follower to collapse itself and absorb energy.

Optionally, the backrest side plate and the connecting plate are respectively provided with a torsion spring connecting part for connecting with a torsion spring.

Optionally, each of the two backrest side plates is provided with a side airbag mounting part, and at least the right backrest side plate is configured with a distal airbag mounting part.

Optionally, the connecting plate is configured with a second energy absorbing part which can cause the connecting plate to collapse itself and absorb energy.

Optionally, the angle adjusting mechanism is a recliner, and a recliner mounting hole is provided at a bottom end of the backrest side plate. Or, the angle adjusting mechanism is an EZ-entry mechanism, and a mounting notch with an open bottom for mounting the EZ-entry mechanism is provided at the bottom end of the backrest side plate.

Optionally, the front linkage rod is provided with a seat basin connecting part for connecting the seat basin. Or, the front linkage rod is provided with an inclination adjusting mechanism for adjusting an angle of the seat basin, and the seat basin is connected with the inclination adjusting mechanism.

Optionally, the seat basin is provided with at least one of a leg rest mounting part, a side-wing mounting part and a sensor mounting part.

Optionally, the vehicle seat frame structure further includes an unlocking structure for unlocking the locking mechanism, and the unlocking structure includes:
an unlocking wheel disc being pivotally arranged on the backrest frame, and provided with an actuating line connected with an external actuating end and a first unlocking line connected with the locking mechanism; and
an actuating line restraint part and a first unlocking line restraint part being configured on the unlocking wheel disc, and being both of an arc structure arranged around a pivot shaft of the unlocking wheel disc, the actuating line restraint part and the first unlocking line restraint part being configured to respectively restrain the actuating line and the first unlocking line corresponding to the actuating line restraint part and the first unlocking line restraint part from sliding around the unlocking wheel disc, and the actuating line restraint part being arranged away from the pivot shaft of the unlocking wheel disc relative to the unlocking line restraint part.

Optionally, an actuating line connection point which can be connected with the actuating line is provided at both ends of the actuating line restraint part, and a first connection point which can be connected with the first unlocking line is provided at both ends of the first unlocking line restraint part.

Optionally, a convexly arranged line hooking block is provided at a side of the unlocking wheel disc, and the line hooking block is provided with a second connection point. A second unlocking line with an end connected with the locking mechanism is connected with the second connection point, and a second unlocking line restraint part is formed between the line hooking block and the unlocking wheel disc. The second unlocking line restraint part and the first unlocking line restraint part are of an arc structure disposed with a constant diameter, and the second unlocking line restraint part is configured to restrain the second unlocking line from sliding around the line hooking block.

Compared with the prior art, the disclosure has following advantages.

For the vehicle seat frame structure according to the disclosure, by configuring the two backrest side plates with a flared structure with the distance between them gradually increasing, the occupants on the vehicle seat may be inserted in the seat when the vehicle is hit, thus effectively reducing injuries suffered by the occupants. In addition, by arranging the first energy absorbing part on the follower, safety performance of the vehicle seat frame may be further improved, so that the vehicle seat frame structure may have a better use effect.

### BRIEF DESCRIPTION OF THE DRAWINGS

The drawings which form a part of the present disclosure, are used to provide a further understanding of the present disclosure. Illustrative embodiments of the present disclosure and their descriptions are intended to explain the present disclosure, and not constructed as undue limitations on the present disclosure. In the drawings:
FIG. 1 is a structural schematic diagram of a vehicle seat frame structure according to an embodiment of the present disclosure;
FIG. 2 is a structural schematic diagram of a backrest frame according to an embodiment of the present disclosure;
FIG. 3 is a structural schematic diagram of a left backrest side plate according to an embodiment of the present disclosure;
FIG. 4 is a structural schematic diagram of a left reinforcing plate according to an embodiment of the present disclosure;
FIG. 5 is a structural schematic diagram of a torsion spring according to an embodiment of the present disclosure;
FIG. 6 is a diagram of an assembly state of a left backrest side plate, a right backrest side plate and a shoulder adjusting mechanism according to an embodiment of the present disclosure;
FIG. 7 is a structural schematic diagram of a right backrest side plate according to an embodiment of the present disclosure;
FIG. 8 is a structural schematic diagram of a backrest spring according to an embodiment of the present disclosure;
FIG. 9 is a structural schematic diagram of a connecting plate according to an embodiment of the present disclosure;
FIG. 10 is a structural schematic diagram, from another perspective, of a connecting plate according to an embodiment of the present disclosure;
FIG. 11 is a structural schematic diagram of a cushion frame according to an embodiment of the present disclosure;
FIG. 12 is a structural schematic diagram of a cushion reinforcing plate according to an embodiment of the present disclosure;
FIG. 13 is a structural schematic diagram of a follower according to an embodiment of the present disclosure;
FIG. 14 is a left view of FIG. 13;
FIG. 15 is a structural schematic diagram of a seat basin according to an embodiment of the present disclosure;
FIG. 16 is a structural schematic diagram of a seat basin connecting member according to an embodiment of the present disclosure;
FIG. 17 is a structural schematic diagram of a seat basin connecting block according to an embodiment of the present disclosure;
FIG. 18 is a diagram of an assembly state of a left backrest side plate, a right backrest side plate and an unlocking part according to an embodiment of the present disclosure;
FIG. 19 is a structural schematic diagram of an unlocking structure for a vehicle seat according to an embodiment of the present disclosure;
FIG. 20 is an exploded view of an unlocking structure for a vehicle seat according to an embodiment of the present disclosure;
FIG. 21 is a diagram of an assembly state of an unlocking wheel disc and a lower housing according to an embodiment of the present disclosure;
FIG. 22 is a structural schematic diagram of an upper housing according to an embodiment of the present disclosure;
FIG. 23 is a structural schematic diagram of a lower housing according to an embodiment of the present disclosure;
FIG. 24 is a structural schematic diagram of an unlocking wheel disc according to an embodiment of the present disclosure;
FIG. 25 is a structural schematic diagram, from another perspective, of an unlocking wheel disc according to an embodiment of the present disclosure;
FIG. 26 is a diagram of an application state of an unlocking structure for a vehicle seat in a manual main driver's seat according to an embodiment of the present disclosure;
FIG. 27 is a diagram of an application state of an unlocking structure for a vehicle seat in a manual assistant's seat according to an embodiment of the present disclosure;
FIG. 28 is a diagram of a connection state of an unlocking wheel disc with an actuating line and a first unlocking line according to an embodiment of the present disclosure;
FIG. 29 is another structural schematic diagram of an unlocking wheel disc according to an embodiment of the present disclosure;
FIG. 30 is a diagram of an application state of an unlocking structure for a vehicle seat in an electric main driver's seat according to an embodiment of the present disclosure;
FIG. 31 is a diagram of an application state of an unlocking structure for a vehicle seat in an electric assistant's seat according to an embodiment of the present disclosure; and
FIG. 32 is a diagram of an application state of an unlocking structure for a vehicle seat in a recliner according to an embodiment of the present disclosure;

### Description of reference numerals:

1- Housing;
11- Upper Housing, 111- Shaft Sleeve, 112- Chuck, 113- Insert Plate, 114- Upper Groove;
12- Lower Housing, 121- Slot, 122- Clamping Hole, 123- Lower Groove, 124- Mounting Column;
2- Unlocking Wheel Disc;
21- Actuating Block, 211- Arc Actuating Groove, 212- Actuating Line Connecting Hole;
22- Unlocking Block, 221- Shaft Hole, 222- First Connecting Hole, 223- First Arc Groove;
23- Harness Guiding Part, 231- Arc Guiding Surface;
24- Line Hooking Block, 241- Second Arc Groove, 242- Second Connecting Hole;
3- Actuating Line, 4- First Unlocking Line, 5- Protective Tube, 6- Tether, 7- Core Wire Connector, 8- Second Unlocking Line, 9- Angle Adjuster Rotating Shaft;
10- Vehicle Seat Frame Structure;
101-Backrest Frame, 1011- Right Backrest Side Plate, 10111- Distal Airbag Mounting Hole;
1012- Upper Beam;
1013- Left Backrest Side Plate, 10131- Angle Adjuster Mounting Hole, 10132- Shoulder Adjusting Mechanism Mounting Hole, 10133- Clamping Hole, 10134- Side Airbag Mounting Hole, 10135- Backrest Spring Mounting Hole, 10136- Torsion Spring Connecting Hole;
1014- Lower Beam;
102- Cushion Frame, 1021- Cushion Side Plate, 1022- Rear Linkage Rod, 1023- Front Linkage Rod, 1024- Follower, 10241- Bending Area, 10242- Groove, 1025- Cushion Reinforcing Plate, 10251- Armrest Mounting Hole;
103-Seat Basin, 1031- Leg Rest Mounting Part, 1032- Side-Wing Mounting Part, 1033-Sensor Mounting Part;
104- Slide Rail Unit;
105- Left Reinforcing Plate;
106- Connecting Plate, 1061- Cushion Connecting Hole, 1062- First Flange, 10621-ISOFIX Mounting Hole, 1063- Second Flange, 1064- Crushing Groove;
107- Mounting Notch, 108- Pulling Wire Mounting Hole;
25- Shoulder Adjusting Mechanism, 26- Backrest Spring, 27- Stepped Screw, 28-Rotating Sleeve, 29- Seat Basin Connecting Member;
30- Seat Basin Connecting Block, 301- Passing Part and 302- Seat Basin Connecting Hole;
31- Torsion Spring.

### DETAILED DESCRIPTION OF THE EMBODIMENTS

It should be noted that the embodiments in the present disclosure and the characteristics in the embodiments can be combined mutually in the case of no conflict.

The present disclosure will be described in details with reference to drawings and in combination with embodiments.

This embodiment relates to a vehicle seat frame structure, which includes a backrest frame unit and a cushion frame unit, and a locking mechanism for locking relative positions of the backrest frame unit and the cushion frame unit is provided between the backrest frame unit and the cushion frame unit.

The backrest frame unit includes a backrest frame which is provided with two, namely left and right, opposite backrest side plates, an upper beam and a lower beam connected between the two backrest side plates, and two connecting plates which are arranged in one-to-one correspondence with the backrest side plates. Each of the connecting plates is pivotally connected with a corresponding backrest side plate via an angle adjusting mechanism for adjusting an angle of the backrest frame, and the two backrest side plates are arranged in a flared manner with a distance between them gradually increasing.

The cushion frame unit includes a cushion frame and an adjusting assembly provided at a bottom of the cushion frame and receiving an external force so as to adjust a height of the cushion frame unit. The cushion frame has two, namely left and right, cushion side plates which are oppositely arranged, and a front linkage rod and a rear linkage rod which are connected between the two cushion side plates. Each of the cushion side plates is connected with a connecting plate at a corresponding side, and a seat basin is connected between the cushion side plates at both sides. A follower causing an external force to transfer to the adjusting assembly is provided on the rear linkage rod, and the follower is configured with a first energy absorbing part which may cause the follower to collapse itself and absorb energy. A structure of the locking mechanism is similar to that of related art, which will not be repeatedly described here again.

For the vehicle seat frame structure according to this embodiment, by configuring the two backrest side plates with a flared structure with a distance between them gradually increasing, occupants on the vehicle seat may be inserted in the seat when the vehicle is hit, thus effectively reducing injuries suffered by the occupants. In addition, by arranging the first energy absorbing part on the follower, safety performance of the vehicle seat frame may be further improved, so that the vehicle seat frame structure may have a better use effect.

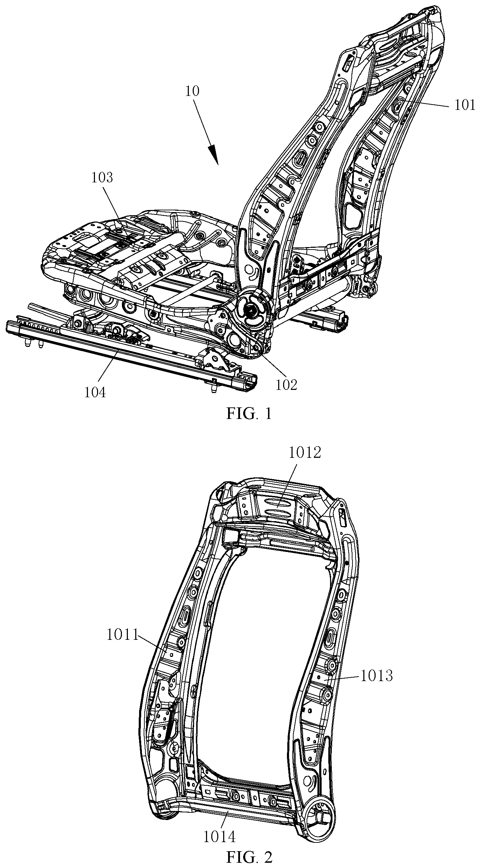

Based on the above overall structure, an exemplary structure of the vehicle seat frame structure of this embodiment is shown in FIG. 1, in which the vehicle seat frame structure 1 is mainly applied to a front seat of a five-door vehicle, and the angle adjusting mechanism described above is specifically a recliner, and a slide rail unit 104 is connected at a bottom of the cushion frame unit. A specific structure of the slide rail unit 104 is similar to that of the related art, which includes a pair of lower slide rails and a pair of upper slide rails which are oppositely arranged. The lower slide rails are fixedly connected with a floor of the vehicle body, and the upper slide rails are fixedly connected with the seat frame and is capable of sliding along the lower slide rails. A locking part for locking sliding between the upper slide rails and the lower slide rails and an unlocking part for unlocking the locking part are arranged between the upper slide rails and the lower slide rails.

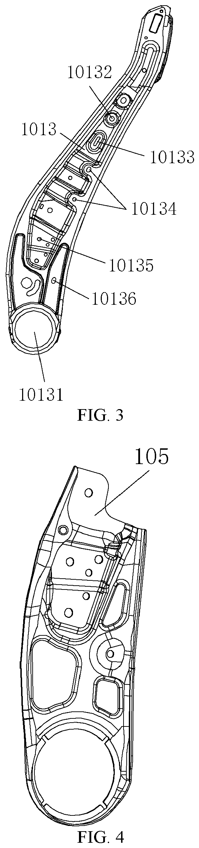

A specific structure of the backrest frame 101 of this embodiment is shown in FIG. 2, in which a hollow part is surrounded between the two backrest side plates, the upper beam 1012 and the lower beam 1014. For convenience of following description, the disclosure is based on an occupant-sitting state. The backrest side plate at a left side in FIG. 2 is called "right backrest side plate 1011" and the backrest side plate at a right side is called "left backrest side plate 1013". As shown in FIG. 3, a recliner mounting hole 10131 is provided at a bottom end of the left backrest side plate 1013, and the left backrest side plate is configured with a side airbag mounting part. The side airbag mounting part includes two side airbag mounting holes 10134 arranged at intervals, and one of the two side airbag mounting holes 10134 is a slotted hole for convenience of platform design. In addition, as a possible implementation, a distance between the two side airbag mounting holes 10134 provided in the left backrest side plate 1013 of this embodiment is 55 mm.

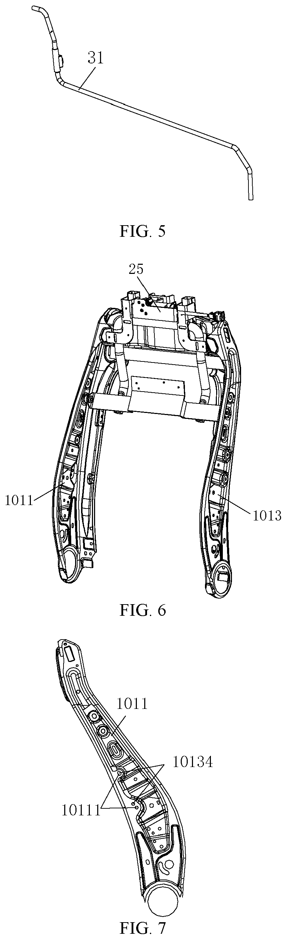

In addition, in order to improve structural strength of the left backrest side plate 1013, a left reinforcing plate 105 is welded to the bottom end of the left backrest side plate 1013, and its structure is shown in FIG. 4. The left reinforcing plate 105 is configured with a through hole corresponding to the recliner mounting hole 10131. In addition, the left backrest side plate 1013 is provided with a torsion spring connecting part for connecting the torsion spring 31 shown in FIG. 5, the torsion spring connecting part is specifically a torsion spring 31 connecting hole 10136 provided on the left backrest side plate 1013, and the torsion spring 31 connecting hole 10136 is provided penetrating through the left reinforcing plate 105.

In this embodiment, a clamping hole 10133 is formed in an upper part of the left backrest side plate 1013 adjacent to the side airbag mounting part, and a plastic buckle for hooking a backrest spring 26 described below may be clamped in the clamping hole 10133. At the same time, a lower part of the left backrest side plate 1013 is configured with a backrest spring mounting hole 10135 penetrating through itself and the left reinforcing plate 105. In addition, as shown in FIG. 6, the left backrest side plate 1013 is further configured with a shoulder adjusting mechanism mounting hole 10132 located at the upper part of the clamping hole 10133, and a specific structure of the shoulder adjusting mechanism 25 is similar to that in the relate art and is shown in FIG. 6, which will not be repeatedly described here again.

As shown in FIG. 7, a specific structure of the right backrest side plate 1011 of this embodiment is similar to that of the left backrest side plate 1013. Difference is that the distance between the two side airbag mounting holes 10134 provided on the right backrest side plate 1011 is 70 mm. In addition, the right backrest side plate 1011 is also provided with a distal airbag mounting part for mounting a distal airbag. The distal airbag mounting part specifically includes two distal airbag mounting holes 10111 arranged at intervals, and an upper distal airbag mounting hole 10111 coincides with an upper side airbag mounting hole 10134. In addition, as a possible implementation, a distance between the two distal airbag mounting holes 10111 in this embodiment is 80 mm.

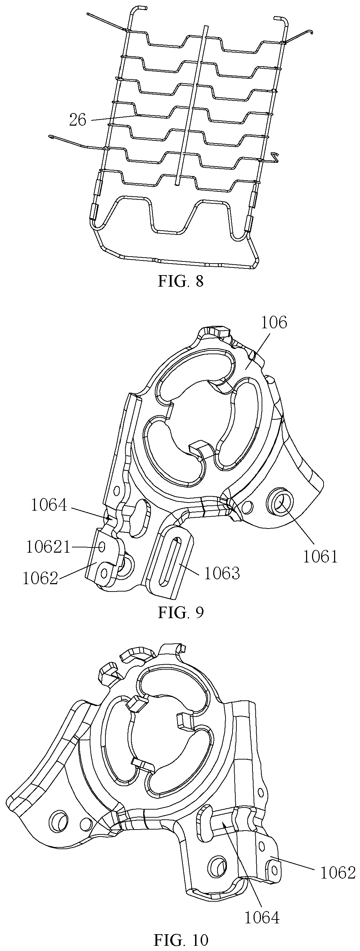

In order to improve comfort of a vehicle seat to which the vehicle seat frame is applied, the backrest spring 26 as shown in FIG. 8 is arranged in the hollow part of the backrest frame 101. An upper end of the backrest spring 26 is hooked in the plastic buckle and a lower end of the backrest spring is inserted into the mounting hole 10135 of the backrest spring 26 described above. In addition, the lower beam 1014 is formed with two hook plates arranged at intervals, and the lower end of the backrest spring 26 is clamped on the two hook plates.

As shown in FIGs. 9 and 10, a structure of the connecting plate 106 of this embodiment includes a main body, a first flange 1062 folded to one side of the main body, and a second flange 1063 formed by continuously folding to a same side of the main body, and the main body is formed with a through hole provided corresponding to the recliner and a cushion connecting hole 1061 for connecting with the cushion side plate 1021. Furthermore, in order to realize installation of the torsion spring 31 on the vehicle seat frame as shown in FIG. 5, the connecting plate 106 is further configured with a torsion spring connecting part for connecting with the torsion spring 31. As shown in FIG. 9, the torsion spring connecting part is specifically a slotted hole provided on the second flange 1063, so that the other end of the torsion spring 31 may be bent and clamped on the second flange 1063.

By providing the slotted hole and the torsion spring 31 connecting hole 10136, two ends of the torsion spring 31 may be respectively arranged in the torsion spring 31 connecting hole 10136 at one side and the slotted hole at the other side, thus realizing the installation of the torsion spring 31 on the vehicle seat frame structure 1. In addition, in order to improve safety performance of the vehicle seat frame structure 1, as shown in FIG. 10, the connecting plate 106 is further configured with a second energy absorbing part which may cause the connecting plate 106 to collapse itself and absorb energy. The second energy absorbing part is specifically a crushing groove 1064 provided on the first flange 1062 and extending to the main body. With this arrangement, failure of the recliner may be effectively prevented after the vehicle collides, thereby improving protection on the occupants. In addition, in order to further improve use effect, the first flange 1062 is also configured with an ISOFIX mounting hole 10621 for mounting a ISOFIX mechanism in the related art.

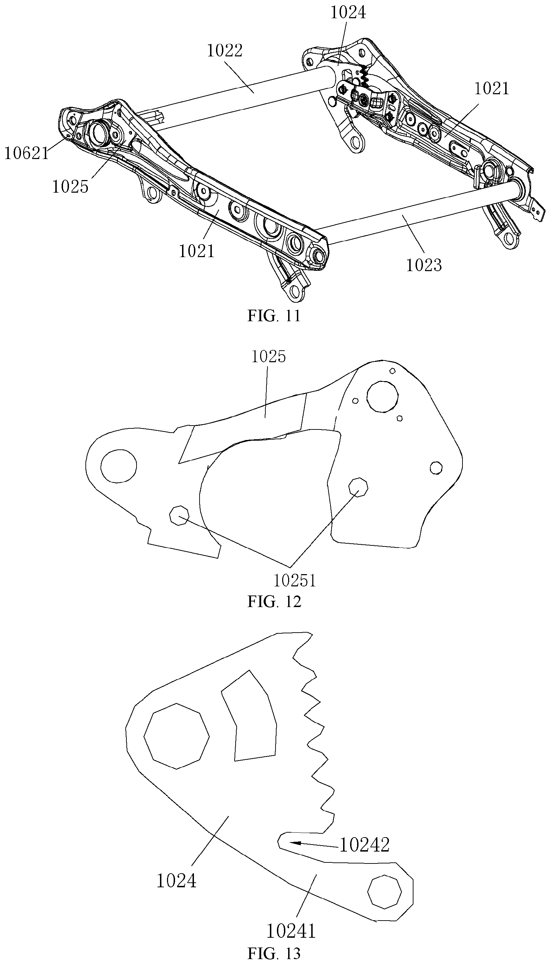

A structure of the cushion frame 102 of this embodiment is shown in FIG. 11, in which two cushion side plates 1021 which are oppositely arranged are in a symmetrical structure, and the front linkage 1023 described above is fixedly connected with the cushion side plate 1021, while the rear linkage rod 1022 is rotationally connected with the cushion side plate 1021. In order to improve the structural strength, as shown in FIG. 11, a cushion reinforcing plate 1025 is welded to a rear end of the cushion side plate 1021. A structure of the cushion reinforcing plate 1025 is shown in FIG. 12. The cushion reinforcing plate 1025 is configured with a notch for the rear linkage rod 1022 to pass through, and is provided with an armrest mounting hole 10251 for mounting an armrest, and the armrest mounting hole 10251 is specifically two flange tapping holes provided on the cushion reinforcing plate 1025 at intervals. Furthermore, an ISOFIX mounting hole 10621 for mounting an ISOFIX bracket is provided at a rear end of a respective cushion side plate 1021. In addition, in order to improve comfort, a cushion spring not shown in the drawings is connected between the two cushion side plates 1021.

In addition to the follower 1024 described above, the adjusting assembly described above further includes a rear linking member arranged on the rear linkage 1022 opposite to the follower 1024, and two front linking members arranged on the front linkage 1023 opposite to each other. The follower 1024 and the rear linking member are both fixedly connected with the rear linkage rod 1022, and are hinged with the upper slide rail. One end of the front linkage is rotatably arranged on the front linkage 1023, and the other end of the front linkage is connected to the upper slide rail. In addition, it should be noted that, in this embodiment, a height adjustment mechanism for adjusting the cushion frame unit is similar to the related art, and mainly includes two forms: a height adjustment pump and a height adjustment motor, which are not repeatedly described here again.

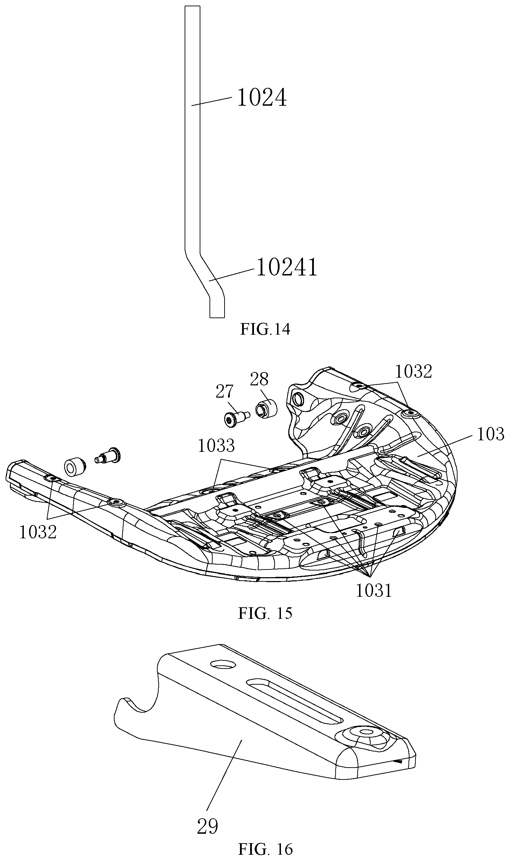

A structure of the follower 1024 of this embodiment is shown in FIGs. 13 and 14, and it has an arc side. The arc side is configured with an arc tooth segment for meshing connection with a driving end of the height adjustment motor or the height adjustment pump, and the follower 1024 is disposed with a connecting hole for connecting with the rear linkage 1022. In addition, in order to improve structural stability and safety performance of the vehicle seat frame structure, the follower 1024 is configured with a first energy absorbing part which can cause the follower 1024 to collapse itself and absorb energy. As shown in FIG. 13 and FIG. 14, the first energy absorbing part is composed of a bending area 10241 provided on the follower 1024 and a groove 10242 provided at the bending area 10241, and a depth of the groove 10242 may be set based on design requirements. With this arrangement, left and right sides of the cushion frame 102 may be synchronously deformed during high-speed rear collision, thus effectively protecting the occupants.

In this embodiment, in order to make the seat basin 103 described above universal in four-way and six-way seats, as shown in FIG. 15, a long cantilever structure is adopted for the seat basin 103 of this embodiment. In addition, in order to mount the seat basin 103, a seat basin connecting hole 302 is configured at the rear end of the cushion side plate 1021, and a rear end of the seat basin 103 is rotatably arranged on the cushion side plate 1021 through a stepped screw 27 inserted into the seat basin connecting hole 302 and a rotating sleeve 28 sleeved on the stepped screw 27. In addition, the front linkage 1023 is fixedly provided with a seat basin connecting member 29 shown in FIG. 16, and a front end of the seat basin 103 is fixedly provided on the seat basin connecting member 29 via a self-tapping screw.

In addition, it should be noted that, in addition to the seat basin connecting member 29 provided on the front linkage 1023, an inclination adjusting mechanism for adjusting an angle of the seat basin 103 can also be provided on the front linkage 1023, and the seat basin 103 is connected with the inclination adjusting mechanism. The inclination adjusting mechanism includes a bracket fixedly connected with the front linkage 1023, a screw motor provided on the bracket, a transmission plate with two ends respectively hinged with the screw motor and a power output end of the bracket, and a lifting rod fixedly connected with the transmission plate, and a seat basin connecting block 30 connected with the seat basin 103 is sleeved on the lifting rod.

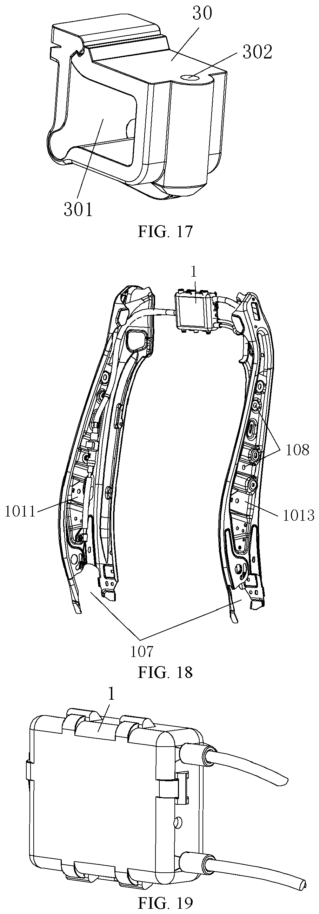

As shown in FIG. 17, a structure of the basin connecting block 30 is configured with a passing part 301 for the lifting rod to pass through, and two adjacent sides of the seat basin connecting block 30 are of a clamping structure that may be clamped and connected to close the passing part 301. The clamping structure specifically includes a clamping groove provided on one side thereof and a clamping block provided on the other side thereof. In this embodiment, a side configured with the clamping block can be away from a side with the clamping groove under an external force, and a gap is formed between the two adjacent sides to allow the lifting rod to enter the passing part 301. In addition, the seat basin connecting hole 302 connected with the seat basin 103 is provided in the connecting hole, adjacent to the passing part 301. Here, it should be noted that a structure of the inclination adjusting mechanism of this embodiment is similar to that of the related art, for which a specific design and implementation can be referred to existing structures.

To further improve the use effect, the seat basin 103 of this embodiment is further provided with at least one of a leg rest mounting part 1031, a side-wing mounting part 1032 and a sensor mounting part 1033 for mounting a pressure sensor. As a preferred embodiment, as shown in FIG. 15, in this embodiment, the leg rest mounting part 1031, the side-wing mounting part 1032 and the sensor mounting part 1033 are simultaneously configured on the base basin 103, and each of the mounting parts is a through hole provided on the base basin 103.

In addition, it should be noted that, in order to improve structural stability of the vehicle seat frame, welding between components to be welded is made by plane connection between a boss and a groove. In addition, it should be noted that by replacing a manual recliner or an electric recliner, the vehicle seat frame structure 1 may be universally used in manual/electric seats.

Further, by replacing the backrest side plate, the vehicle seat frame structure 1 of the present disclosure may be used in three/five-door vehicles, and the angle adjusting mechanism applied in three-door vehicles is an EZ-entry mechanism. A structure of the backrest side plate is shown in Figure 18, and its overall structure is similar to that of the backrest side plate described in Embodiment 1, but with difference from that in Embodiment 1 that the recliner mounting hole 10131 is provided at the bottom end of the backrest side plate in Embodiment 1, and the mounting notch 107 with the open bottom for mounting the EZ-entry mechanism is provided at the bottom end of the backrest side plates in this embodiment. In addition, the two backrest side plates are both configured with a pulling wire mounting part for mounting the EZ-entry pulling wire, and the pulling wire mounting part is specifically a plurality of pulling wire mounting holes 108 which are provided on the backrest side plate at intervals.

In this embodiment, in order to further improve the use effect, the vehicle seat frame structure 1 further includes an unlocking structure for unlocking the locking mechanism described above. The unlocking structure of this embodiment mainly includes an unlocking wheel disc, an actuating line restraint part and a first unlocking line restraint part, and the unlocking wheel disc is provided with an actuating line connected with an external actuating end and a first unlocking line connected with the locking mechanism.

In this embodiment, the unlocking wheel disc is pivotally arranged on the backrest frame 101, and the external execution end is a tether provided on the backrest frame 101.

The actuating line restraint part and the first unlocking line restraint part are both provided on the unlocking wheel disc 2, and are both of an arc structure provided along a pivot shaft of the unlocking wheel disc. In addition, the actuating line restraint part and the first unlocking line restraint part are configured to respectively restrain the actuating line and the first unlocking line corresponding to the two parts from sliding around the unlocking wheel disc, and the actuating line restraint part is arranged away from the pivot shaft of the unlocking wheel disc relative to the unlocking line restraint part.

According to the unlocking structure for the vehicle seat of this embodiment, by providing the unlocking wheel disc connected with the actuating line and the first unlocking line 4, configuring the actuating line restraint part and the first unlocking line restraint part with an arc structure on the unlocking wheel disc, and arranging the actuating line restraint part away from the pivot shaft relative to the unlocking line restraint part, the vehicle seat can be unlocked with a constant small unlocking force input by the actuating line according to principle of equal torque, with better operation perception.

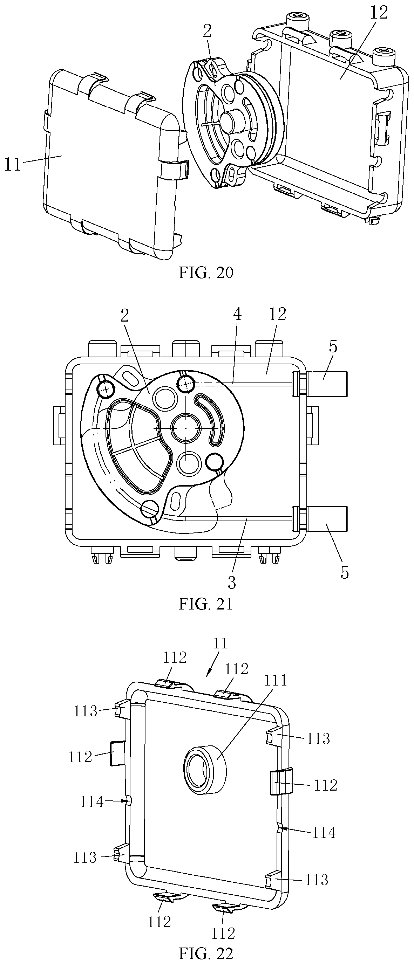

An exemplary structure of the unlocking structure for the vehicle seat according to this embodiment is shown in FIGs. 19 to 21, and the unlocking wheel disc 2 is specifically installed in the housing 1 and mounted on the upper beam 1012 via the housing 1. As shown in FIG. 20, for convenience of processing and manufacturing, the housing 1 of this embodiment has a generally rectangular structure, and includes an upper housing 11 and a lower housing 12 which are caught up and down and enclose an accommodating cavity. In addition, in order to facilitate connection, the upper housing 11 is are clamped and connected with the lower housing 12 in this embodiment. In addition, as shown in FIG. 19, a plurality of harness holes oppositely arranged are formed on two opposite sides of the housing 1.

Specifically, as shown in FIG. 22, the upper housing 11 of this embodiment is formed with a shaft sleeve 111 protruding toward inside of the upper housing for mounting the pivot shaft of the unlocking wheel disc 2. A plurality of chucks 112 to be clamped and connected with the lower housing 12 are formed on respective sides of the upper housing 11, and a structure of the chuck 112 is similar to that in related art. In addition, as shown in FIG. 4, left and right side plates of the upper housing 11 are respectively configured with two insert plates 113 outer convexly arranged.

The insert plate 113 of this embodiment can not only be plugged and connected with a slot 121 described below to form the harness hole described above, but also improve connection firmness between the upper housing 11 and the lower housing 12 due to plug-in connection between the insert plate 113 and the slot 121. As a preferred embodiment, the insert plate 113 of this embodiment is tapered, and a free end of the insert plate 113 is configured with an arc notch. In addition, as shown in FIG. 21, the upper housing 11 is further configured with an upper groove 114 located between the two insert plates 113, so as to enclose with a lower groove 123 described below to form the harness hole described above.

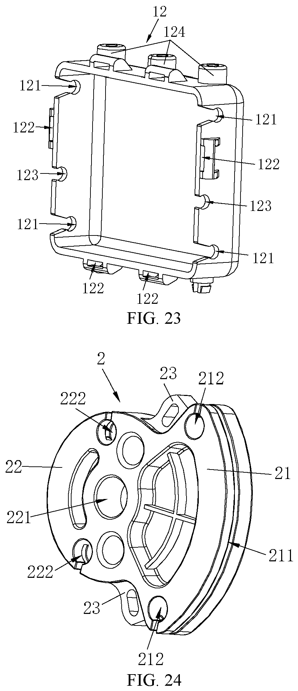

A structure of the lower housing 12 of this embodiment is shown in FIG. 23. The lower housing 12 is configured with clamping blocks which are arranged in one-to-one correspondence with the chunks 112, and each of the clamping blocks is formed with a clamping hole 10133122 to be clamped and connected with the chunk 112. In addition, corresponding to the insert plate 113, the lower housing 12 is configured with a slot 121 which is adapted to the insert plate 113. Because the insert plate 113 is inserted into a respective slot 121, a harness hole for a harness to pass through as shown in FIG. 1 can be enclosed between them.

Meanwhile, as shown in FIG. 23 in combination with FIG. 19, corresponding to the upper groove 114 of the upper housing 11, the lower housing 12 is configured with a lower groove 123, which may enclose with the upper groove 114 to form the harness hole described above. In addition, as shown in FIG. 23, three mounting columns 124 arranged at intervals are outer convexly formed on a top of the lower housing 12, and a mounting hole is formed on a respective mounting column 124, through which the housing 1 is mounted to the upper beam 1012.

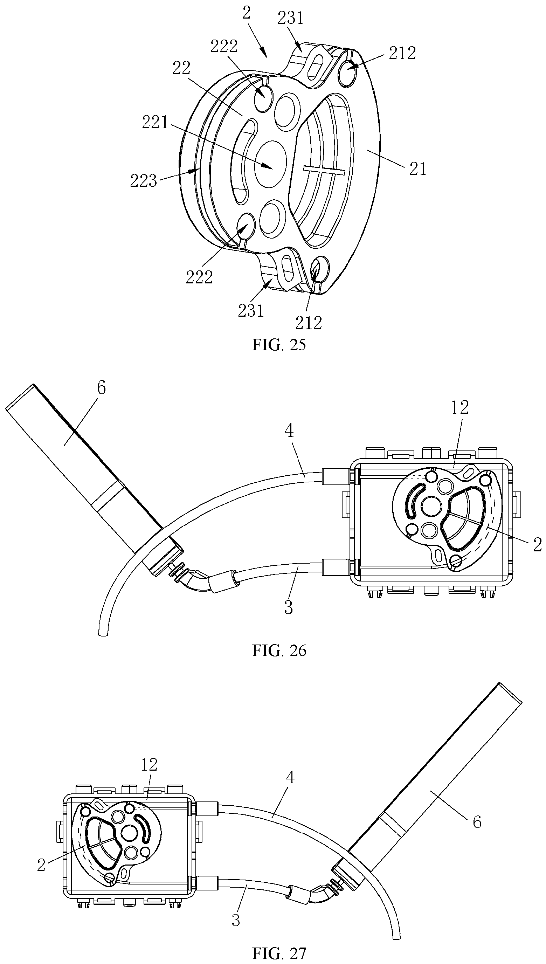

A structure of the unlocking wheel disc 2 described above is shown in FIG. 24 in combination with FIG. 25, which includes an actuating block 21 and an unlocking block 22 that are fixedly connected with each other. Both the actuating block 21 and the unlocking block 22 are arc blocks, and two arc blocks are coaxially arranged but have different radii. In addition, a central angle of the unlocking block 22 is larger than that of the actuating block 21, and the unlocking block 22 is configured with a shaft hole 221, so that the shaft hole 221 may be sleeved on the shaft sleeve 111 of the housing 1, so as to realize pivotable arrangement of the unlocking wheel disc 2. In addition, in order to effectively ensure that the actuating line 3 slides along a tangential direction of the actuating block 21, as shown in FIG. 24, the unlocking wheel disc 2 is configured with a harness guiding part 23 located outside an end of the arc groove on the actuating block 21. The harness guiding part 23 has an arc guiding surface 231 disposed with a same diameter as a groove bottom of the arc groove.

In addition, in order to improve operation perception in unlocking the seat, the actuating line restraint part and the first unlocking line restraint part of this embodiment are oppositely arranged on the unlocking wheel disc 2. Based on a specific structure of the unlocking wheel disc 2, as shown in FIGs. 24 and 25, the actuating line restraint part specifically is an arc groove provided on the actuating block 21 along its edge, while the first unlocking line restraint part is an arc groove provided on the unlocking block 22 along its edge. Here, for convenience of the following description, the arc grooves provided on the actuating block 21 and the unlocking block 22 are referred to as "arc actuating groove 211" and "first arc groove 223" respectively.

In addition, in order to make the unlocking structure of this embodiment applicable to both a manual main driver's seat and a manual assistant's seat, in this embodiment, both ends of the arc actuating groove 211 are provided with a connecting point of the actuating line 3 which may be connected with the actuating line 3, and both ends of the first arc groove 223 are provided with a first connecting point which can be connected with the first unlocking line 4. With this arrangement, as shown in FIGs. 26 and 27, the unlocking structure according to this embodiment may be applied to both the main driver's seat and the assistant's seat by changing arrangement positions of the actuating line 3 and the first unlocking line 4 on the arc actuating groove 211 and the first arc groove 223, respectively.

As shown in FIG. 24 and FIG. 25, the connecting point of the actuating line 3 in this embodiment is a connecting hole provided on the actuating block 21 and communicated with the arc actuating groove 211, and the first connecting point is a connecting hole communicated with the first arc groove 223. As a preferred embodiment, an axial direction of each connecting hole is disposed along an axial direction of the pivot shaft of the unlocking wheel disc 2. In addition, for convenience of following description, the connecting hole on the actuating block 21 is referred to as the "actuating line connecting hole 212" and the connecting hole on the unlocking block 22 is referred to as the "first connecting hole 222".

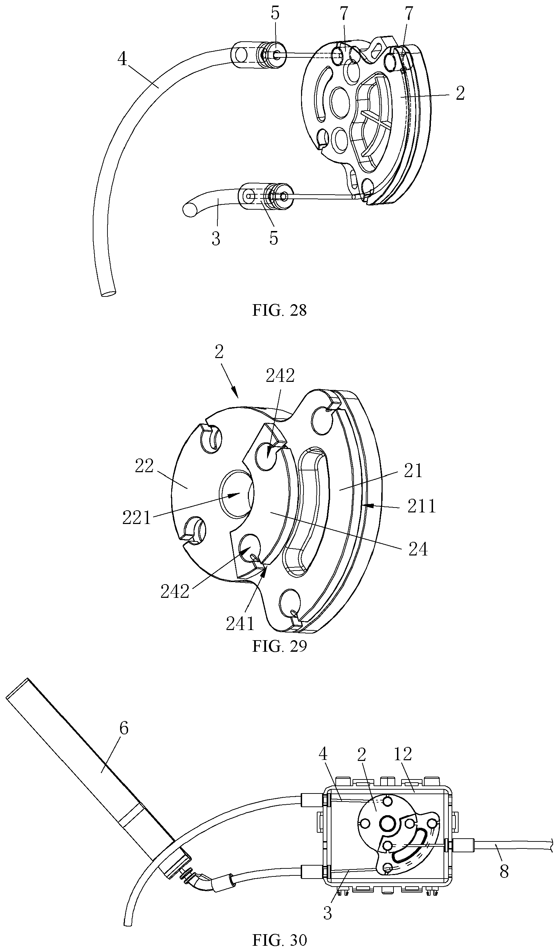

In this embodiment, in order to improve unlocking effect, as shown in FIG. 28, the actuating line 3 and the first unlocking line 4 are each hooked into a corresponding connecting hole through a core wire connector 7 arranged at an end of the actuating line or the first unlocking line, and the core wire connector 7 is in a cylindrical shape which is adapted to the connecting hole. In addition, as shown in FIG. 28, a protective tube 5 is provided on both the actuating line 3 and the first unlocking line 4, and the actuating line 3 and the first unlocking line 4 pass through the harness hole described above via the protective tube 5. With this arrangement, not only the actuating line 3 and the first unlocking line 4 can be effectively prevented from being cut by the housing 1, but also tangential sliding of respective wire harnesses along the unlocking wheel disc 2 can be effectively ensured.

In addition, in order to make the unlocking structure of this embodiment applicable to the electric seat, as shown in FIG. 28, based on an existing electric seat which has a locking mechanism with two unlocking lines, in this embodiment, a convexly arranged line hooking block 24 is provided at a side of the unlocking wheel disc 2. This line hooking block 24 is specifically provided on the unlocking block 22, and is provided with a second connecting point arranged opposite to the first connecting point. This second connection point is used to provide a second unlocking line 8 connected with the locking mechanism of the electric seat.

In addition, a second unlocking line restraint part is formed between the line hooking block 24 and the actuating block 21. The second unlocking line restraint part and the first unlocking line restraint part are of an arc structure disposed with a constant diameter, and the second unlocking line restraint part is configured to constrain sliding of the second unlocking line 8 around the line hooking block 24. In this embodiment, the second unlocking line 8 restraint part is specifically a second arc groove 241 enclosed by the line hooking block 24 and the actuating block 21. Based on an arc groove structure of the second unlocking line restraint part, similarly to the above structure, the second connecting point of this embodiment is a connecting hole communicated with the second arc groove 241, which is specifically provided at two ends of the second arc groove 241 respectively. For convenience of description, a connecting hole serving as the second connection point is referred to as "second connecting hole 242".

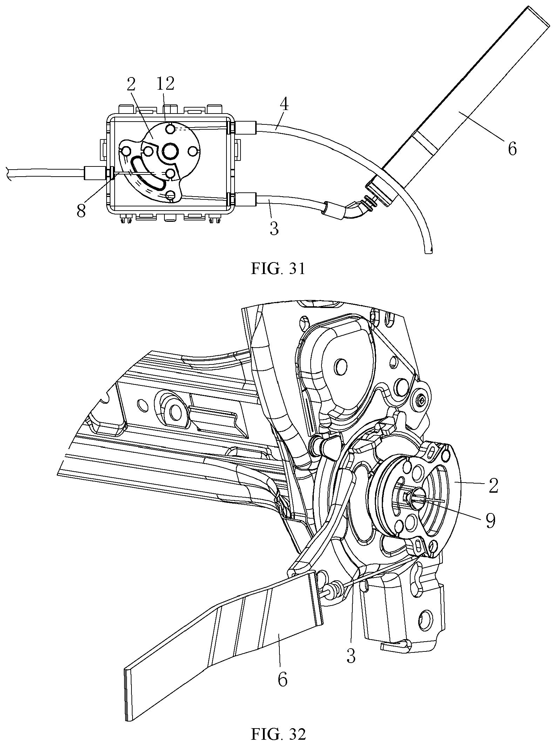

As shown in FIG. 30, by providing the second arc groove 241 and the second connecting hole 242, the first unlocking line 4 and the second unlocking line 8 can be respectively connected with the locking mechanism of the electric main driver's seat, and then the unlocking wheel disc 2 may be rotated by pulling the tether 6 connected with the actuating line 3, so that the first unlocking line 4 and the second unlocking line 8 can be pulled to unlock the locking mechanism. In addition, as shown in FIG. 31, by changing hooking positions of the actuating line 3, the first unlocking line 4 and the second unlocking line 8 on the unlocking wheel disc 2, the unlocking structure of this embodiment may be applied to the electric assistant's seat.

Finally, it should be noted that in addition to that the unlocking structure is installed on the backrest through the housing 1, the shaft hole 221 of the unlocking wheel disc 2 may be directly sleeved on a recliner rotating shaft 9 of the seat as shown in FIG. 32.

Based on above overall description, the vehicle seat frame structure of this embodiment not only has good safety performance, but also can be applied to the manual/electric seat by replacing the recliner, and can be applied to the three-door/five-door vehicle by replacing the backrest side plates. In addition, the unlocking structure for the vehicle seat of this embodiment can be applied to the manual seat, the electric seat, and can be commonly used in the main driver's seat and the assistant's seat. In addition, by making a radius of the arc actuating groove 211 larger than those of the first arc groove 223 and the second arc groove 241, a required unlocking force is not only reduced, but also is made constant, thus solving a problem of poor operation perception caused by an unstable unlocking force in the existing unlocking structure.

The above description is only the preferred embodiments of the present disclosure, and it is not intended to limit the present disclosure. Any modification, equivalent substitution, improvement, etc. made within the spirit and principle of the present disclosure shall be encompassed within the protection scope of the present disclosure.

## Claims

1. A vehicle seat frame structure, comprising a backrest frame unit and a cushion frame unit, a locking mechanism for locking relative positions of the backrest frame unit and the cushion frame unit being provided between the backrest frame unit and the cushion frame unit, **characterized in that**
the backrest frame unit comprises a backrest frame (101) which is provided with two, namely left and right, opposite backrest side plates, an upper beam (1012) and a lower beam (1014) connected between the two backrest side plates, and two connecting plates (106) which are arranged in one-to-one correspondence with the backrest side plates, each of the connecting plates (106) is pivotally connected with a corresponding backrest side plate via an angle adjusting mechanism for adjusting an angle of the backrest frame (101), and the two backrest side plates are arranged in a flared manner with a distance between the two backrest side plates gradually increasing; and
the cushion frame unit comprises: a cushion frame (102) and an adjusting assembly provided at a bottom of the cushion frame (102), wherein the cushion frame (102) has two, namely left and right, cushion side plates (1021) which are oppositely arranged, and a front linkage rod (1023)and a rear linkage rod (1022) which are connected between the two cushion side plates (1021), each of the cushion side plates (1021) is connected with a connecting plate (106) at a corresponding side, and a seat basin (103) is connected between the cushion side plates (1021) at both sides, the adjusting assembly is provided with a follower (1024) provided on the rear linkage rod (1022), the follower (1024) receives an external force to form an action of the adjusting assembly so as to adjust a height of the cushion frame unit, and the follower (1024) is configured with a first energy absorbing part which causes the follower (1024) to collapse itself and absorb energy.

2. The vehicle seat frame structure according to claim 1, **characterized in that** the backrest side plate and the connecting plate (106) are respectively provided with a torsion spring connecting part for connecting with a torsion spring (31).

3. The vehicle seat frame structure according to claim 1, **characterized in that** each of the two backrest side plates is provided with a side airbag mounting part, and at least the right backrest side plate is configured with a distal airbag mounting part.

4. The vehicle seat frame structure according to claim 1, **characterized in that** the connecting plate (106) is configured with a second energy absorbing part which causes the connecting plate (106) to collapse itself and absorb energy.

5. The vehicle seat frame structure according to claim 1, **characterized in that** the angle adjusting mechanism is a recliner, and a recliner mounting hole (10131) is provided at a bottom end of the backrest side plate; or, the angle adjusting mechanism is an EZ-entry mechanism, and a mounting notch (107) with an open bottom for mounting the EZ-entry is provided at the bottom end of the backrest side plate.

6. The vehicle seat frame structure according to claim 1, **characterized in that** the front linkage rod (1023) is provided with a seat basin connecting part for connecting the seat basin (103); or, the front linkage rod (1023) is provided with an inclination adjusting mechanism for adjusting an angle of the seat basin (103), and the seat basin (103) is connected with the inclination adjusting mechanism.

7. The vehicle seat frame structure according to claim 1, **characterized in that** the seat basin (103) is provided with at least one of a leg rest mounting part (1031), a side-wing mounting part (1032) and a sensor mounting part (1033).

8. The vehicle seat frame structure according to any one of claims 1 to 7, **characterized in that** the vehicle seat frame structure further comprises an unlocking structure for unlocking the locking mechanism, and the unlocking structure comprises:
an unlocking wheel disc (2) being pivotally arranged on the backrest frame (101), and provided with an actuating line (3) connected with an external actuating end and a first unlocking line (4) connected with the locking mechanism; and
an actuating line restraint part and a first unlocking line restraint part being configured on the unlocking wheel disc (2), and being both of an arc structure arranged around a pivot shaft of the unlocking wheel disc (2), the actuating line restraint part and the first unlocking line restraint part being configured to respectively restrain the actuating line (3) and the first unlocking line (4) corresponding to the actuating line restraint part and the first unlocking line restraint part from sliding around the unlocking wheel disc (2), and the actuating line restraint part being arranged away from the pivot shaft of the unlocking wheel disc (2) relative to the unlocking line restraint part.

9. The vehicle seat frame structure according to claim 8, **characterized in that** an actuating line connection point which is connected with the actuating line (3) is provided at both ends of the actuating line restraint part, and a first connection point which is connected with the first unlocking line (4) is provided at both ends of the first unlocking line restraint part.

10. The vehicle seat frame structure according to claim 9, **characterized in that** a convexly arranged line hooking block (24) provided at a side of the unlocking wheel disc (2), and the line hooking block (24) is provided with a second connection point, a second unlocking line (8) with an end connected with the locking mechanism is connected with the second connection point, and a second unlocking line restraint part is formed between the line hooking block (24) and the unlocking wheel disc (2), the second unlocking line restraint part and the first unlocking line restraint part are of an arc structure disposed with a constant diameter, and the second unlocking line restraint part is configured to restrain the second unlocking line (8) from sliding around the line hooking block (24).
